# FASCICULE DE BREVET EUROPEEN

(11) **EP 3 186 102 B1**
(45) Date de publication et mention de la délivrance du brevet: **04.12.2019**
(21) Numéro de dépôt: 15742380.7
(22) Date de dépôt: 07.07.2015
(51) Int. Cl.: B60K 11/08

(54) **VÉHICULE AUTOMOBILE A RÉPARABILITÉ AMÉLIORÉE**
KRAFTFAHRZEUG MIT VERBESSERTER REPARIERBARKEIT
MOTOR VEHICLE WITH IMPROVED REPAIRABILITY

(30) Priorité: 29.08.2014 FR 1458113
(43) Date de publication de la demande: 05.07.2017
(73) Titulaire: PSA Automobiles SA, 78300 Poissy (FR)
(72) Inventeur: MAGAS, Mihaela Maria, 70110 Autrey les Cerre (FR)
(86) Numéro de dépôt international: PCT/FR2015/051871
(87) Numéro de publication internationale: WO 2016/030588

(56) Documents cités:
- EP-A1- 2 080 658
- DE-A1-102012 209 074
- JP-U- S58 112 625

## Description

L'invention concerne la réparabilité des véhicules automobiles après un choc, et notamment la réparabilité de la façade avant du véhicule. Le document EP 2 080 658 A1 montre l'état de la technique pertinent.

On a proposé d'équiper les véhicules avec un module d'entrée d'air piloté, placé en façade avant du véhicule et formant un organe d'ouverture sélective d'un passage d'air de ventilation du compartiment moteur et notamment du radiateur de refroidissement. Un tel module d'entrée d'air piloté est typiquement fixé sur la poutre de réparabilité du véhicule ainsi que sur la partie du pare choc formant déflecteur.

La zone avant du véhicule est exposée aux chocs tout en étant le lieu de réception de nombreux organes sensibles. Il est souhaitable d'y adopter une disposition de ces organes qui permette d'éviter un endommagement collectif de ceux-ci en cas de choc. Cette nécessité figure dans les classements des véhicules en termes de coûts des sinistres tels que réalisés par certaines compagnies d'assurance.

Le but de l'invention est de proposer un aménagement de façade avant de véhicule automobile dans lequel la présence d'un module d'entrée d'air piloté n'engendre que peu ou pas de surcout en cas de choc en façade avant du véhicule.

Ce but est atteint selon l'invention grâce à un véhicule automobile comprenant un compartiment moteur, un module de ventilation forcée disposé dans le compartiment moteur, un module d'entrée d'air piloté formant un passage d'air au travers du module de ventilation forcée et un module de pilotage, le module d'entrée d'air piloté étant configuré pour adopter sous la commande du module de pilotage sélectivement au moins une position d'autorisation de passage d'air et une position de limitation ou de blocage de passage d'air, le module d'entrée d'air piloté comportant au moins un organe formant obturateur variable du passage d'air et un support de maintien de l'organe formant obturateur variable caractérisé en ce que ledit support de maintien est fixé sur le module de ventilation forcée, et en ce que le module d'entrée d'air piloté comporte une liaison entre l'organe formant obturateur variable et le support de maintien laquelle liaison est configurée pour céder et autoriser ainsi un déplacement de l'organe formant obturateur variable par rapport au support de maintien en direction du module de ventilation forcée en cas de choc sur l'organe formant obturateur variable et le module d'entrée d'air piloté comporte un aménagement d'arrêt de l'organe formant obturateur variable en déplacement de celui-ci vers le module de ventilation forcée, l'aménagement d'arrêt étant configuré pour empêcher un endommagement du module de ventilation forcée par l'organe formant obturateur variable.

Avantageusement, le module d'entrée d'air piloté comporte deux organes formant chacun un obturateur variable de passage d'air distinct.

Avantageusement, la liaison entre l'organe formant obturateur variable et le support de maintien est configurée pour désolidariser l'organe formant obturateur variable par rapport au support de maintien selon une ligne circonférentielle à l'organe formant obturateur variable.

Avantageusement, la liaison entre l'organe formant obturateur variable et le support de maintien est configurée pour désolidariser l'organe formant obturateur variable du support de maintien selon une ligne entourant totalement l'organe formant obturateur variable.

Avantageusement, l'aménagement d'arrêt est constitué par au moins un appendice formé par l'organe formant obturateur variable et une butée d'arrêt de l'appendice.

Avantageusement, la butée d'arrêt est formée par le support de maintien.

Avantageusement, le module d'entrée d'air piloté comporte un même support de maintien pour les deux organes formant obturateurs variables et le module d'entrée d'air piloté comporte pour chaque organe formant obturateur variable une liaison respective entre l'organe formant obturateur variable et le support de maintien, chacune de ces liaisons étant configurée pour autoriser un déplacement de l'organe formant obturateur variable par rapport au support de maintien en direction du module de ventilation forcée en cas de choc sur l'organe formant obturateur variable et le module d'entrée d'air piloté comporte pour chaque organe formant obturateur variable un aménagement respectif d'arrêt de l'organe formant obturateur variable en déplacement de celui-ci vers le module de ventilation forcée, l'aménagement d'arrêt étant à chaque fois configuré pour empêcher un endommagement du module de ventilation forcée par l'organe formant obturateur variable.

Avantageusement, la liaison entre l'organe formant obturateur variable et le support de maintien forme une ligne fragilisée pour constituer une ligne de rupture en cas de choc sur l'organe formant obturateur variable.

Avantageusement, la ligne présente une épaisseur de matière suffisamment faible pour rompre en cas de choc sur l'organe formant obturateur variable.

Avantageusement, la ligne est constituée d'une suite d'orifices successifs.

D'autres caractéristiques, buts et avantages de l'invention apparaitront à la lecture de la description détaillée qui va suivre, faite en référence aux figures annexées sur lesquelles :
- La figure 1 est une vue de face d'un module d'entrée d'air piloté selon un mode de réalisation de l'invention,
- la figure 2 est une vue de face d'un organe formant obturateur variable selon ce même mode de réalisation de l'invention,
- La figure 3 est une vue de côté de ce même organe formant obturateur variable.

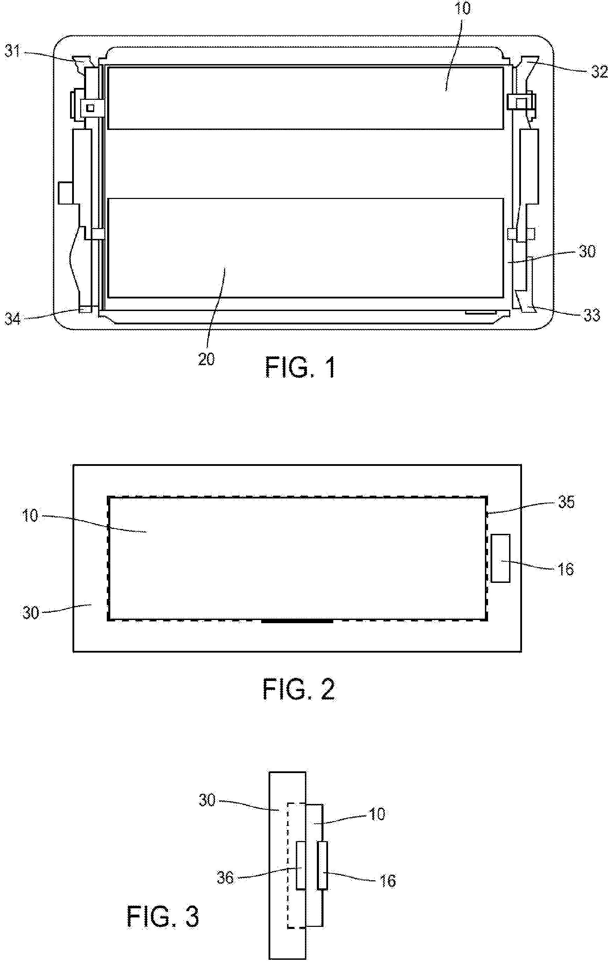

Le module d'entrée d'air piloté de la figure 1 est un module à deux organes formant chacun un obturateur variable et ayant chacun ici la forme d'une cassette. Ces cassettes, référencées 10 et 20, sont disposées l'une au-dessus de l'autre dans le référentiel du véhicule, et comportent entre elles un espacement 25 destiné à recevoir la poutre de réparabilité. Cet espacement est disposé en face avant du module. De manière connue en soi, le pare choc du véhicule se trouve en avant de la poutre de réparabilité. Le module d'entrée d'air piloté comporte également un support 30 sur lequel sont maintenues les deux cassettes 10 et 20. Le support 30 est quant à lui fixé sur la façade avant du groupe moto-ventilateur par l'intermédiaire de quatre liaisons 31, 32, 33 et 34 disposées ici aux quatre coins du module d'entrée d'air piloté. Le groupe moto-ventilateur est mobile en cas de choc, grâce à une fixation du groupe moto-ventilateur par des plots mobiles selon l'axe longitudinal du véhicule, ici sur une distance d'environ 40mm.

Chacune des cassettes 10 et 20 comporte, de manière connue en soi, un dispositif mécanique d'ouverture et de fermeture ou de limitation du passage d'air, passage d'air que chaque cassette constitue pour le groupe moto-ventilateur disposé en arrière des cassettes. Les termes au-dessus, au-dessous, en avant, en arrière, sont ici utilisés en référence au référentiel du véhicule roulant et disposé sur un plan horizontal.

Tel que représenté plus en détail sur les figures 2 et 3, la cassette 10 est ici associée au support 30 par l'intermédiaire d'une liaison 35 constituée, dans le présent exemple, d'une peau en matière plastique laquelle est ici venue de matière avec la cassette 10 et le support 30. La liaison 35 s'étend autour de la cassette 10 sous la forme d'une ligne circonférentielle à la cassette. En cas de choc sur la cassette 10, la liaison 35 forme une liaison fusible, ici une ligne de rupture privilégiée ou ligne fusible, de sorte que la cassette 10 se détache de son support 30 au niveau de cette ligne et effectue ensuite un mouvement vers l'arrière en direction du groupe moto-ventilateur. La fusibilité peut être constituée comme ici par une faible épaisseur par exemple inférieure à 1mm ou par des trous de matière répartis autour des deux cassettes. De manière avantageuse et tel que représenté sur la figure 2, la ligne fusible est avantageusement interrompue de sorte qu'elle n'entoure pas totalement la cassette 10. Ainsi, la liaison 35 entre la cassette 10 et le support 30 présente ici une partie ayant une résistance mécanique plus élevée, représentée en partie inférieure sur la figure 2. Ainsi, en cas de choc sur la cassette 10 celle-ci se déplace vers le groupe moto-ventilateur tout en restant freinée dans ce mouvement par cette partie de résistance plus élevée.

La cassette 10 est ici munie d'un appendice 16 disposé en proéminence latérale sur un bord de la cassette et en recouvrement partiel du support 30. Plus précisément, le support 30 comporte, en regard de l'appendice 16, un logement 36 destiné à recevoir l'appendice 16 en cas de choc sur la cassette 10. L'appendice 16 vient alors en butée contre le fond du logement 36. Chaque couple constitué d'un appendice et d'un logement associé forme donc un limiteur de déplacement pour la cassette. Grâce à un tel aménagement, on arrête la cassette avant que celle-ci ne pénètre brutalement dans le groupe moto-ventilateur et n'engendre ainsi la nécessité de procéder au remplacement de du groupe moto-ventilateur. Le présent aménagement apporte ainsi une compressibilité du module d'entrée d'air piloté et par conséquent de la face avant du véhicule, tout en préservant le véhicule d'un endommagement en cascade de ses organes en façade avant. La compressibilité permet non seulement la déformabilité de la façade avant pour la protection des occupants du véhicule et des piétons, mais cette déformabilité permet également un déplacement relatif de la cassette et du groupe moto-ventilateur et participe ainsi à la protection du groupe moto-ventilateur et plus généralement des organes du véhicule disposés en arrière du module d'entrée d'air piloté. Ainsi le groupe moto-ventilateur, mais également le filtre à particules, se trouvent protégés par un tel dispositif, entrainant le gain d'au moins une classe de réparabilité selon le classement des compagnies d'assurance. En effet, tout impact sur un équipement de la façade avant, tel que le condenseur, la bouteille, le matériel de refroidissement, même léger tel qu'un simple marquage, engendre la perte au minimum d'une classe de réparabilité selon notamment le classement des assurances allemandes. La seconde cassette 20 du présent module d'entrée d'air piloté est équipée des mêmes aménagements de fusibilité et de limitation de course de sorte que le module dans son ensemble présente l'avantage d'une telle compressibilité maitrisée.

Dans le présent exemple, les cassettes 10 et 30 se trouvent disposées en arrière d'une grille de pare choc. La fusibilité est donc ici déclenchée au contact de la grille de pare choc. En variante, la fusibilité est déclenchée par tout autre élément disposé devant le module d'entrée d'air piloté et la ou les cassette(s) sont arrêtées par les limiteurs de course afin d'éviter un recul trop important. Si la cassette cassée n'était pas arrêtée, sa course s'arrêterait sur le groupe moto-ventilateur et l'endommagerait.

## Revendications

1. Véhicule automobile comprenant un compartiment moteur, un module de ventilation forcée disposé dans le compartiment moteur, un module d'entrée d'air piloté (10,20,30) formant un passage d'air au travers du module de ventilation forcée et un module de pilotage, le module d'entrée d'air piloté (10,20,30) étant configuré pour adopter sous la commande du module de pilotage sélectivement au moins une position d'autorisation de passage d'air et une position de limitation ou de blocage de passage d'air, le module d'entrée d'air piloté (10,20,30) comportant au moins un organe (10,20) formant obturateur variable du passage d'air et un support (30) de maintien de l'organe formant obturateur variable (10,20), **caractérisé en ce que** ce support de maintien (30) est fixé sur le module de ventilation forcée, et **en ce que** le module d'entrée d'air piloté (10,20,30) comporte une liaison (35) entre l'organe formant obturateur variable (10,20) et le support de maintien (30) laquelle liaison (35) est configurée pour céder et autoriser ainsi un déplacement de l'organe formant obturateur variable (10,20) par rapport au support de maintien (30) en direction du module de ventilation forcée en cas de choc sur l'organe formant obturateur variable (10,20) et le module d'entrée d'air piloté (10,20,30) comporte un aménagement d'arrêt (16,36) de l'organe formant obturateur variable (10,20) en déplacement de celui-ci vers le module de ventilation forcée, l'aménagement d'arrêt (16,36) étant configuré pour empêcher un endommagement du module de ventilation forcée par l'organe formant obturateur variable (10,20).

2. Véhicule automobile selon la revendication 1, **caractérisé en ce que** le module d'entrée d'air piloté (10,20,30) comporte deux organes (10,20) formant chacun un obturateur variable de passage d'air (10,20) distinct.

3. Véhicule automobile selon la revendication 1 ou la revendication 2, **caractérisé en ce que** la liaison (35) entre l'organe formant obturateur variable (10,20) et le support de maintien (30) est configurée pour désolidariser l'organe formant obturateur variable (10,20) par rapport au support de maintien (30) selon une ligne (35) circonférentielle à l'organe formant obturateur variable (10,20).

4. Véhicule automobile selon la revendication précédente, **caractérisé en ce que** la liaison (35) entre l'organe formant obturateur variable (10,20) et le support de maintien (30) est configurée pour désolidariser l'organe formant obturateur variable (10,20) du support de maintien (30) selon une ligne (35) entourant totalement l'organe formant obturateur variable (10,20).

5. Véhicule automobile selon l'une quelconque des revendications précédentes, **caractérisé en ce que** l'aménagement d'arrêt (16,36) est constitué par au moins un appendice (16) formé par l'organe formant obturateur variable (10,20) et une butée d'arrêt (36) de l'appendice (16).

6. Véhicule automobile selon la revendication précédente, **caractérisé en ce que** la butée d'arrêt (36) est formée par le support de maintien (30).

7. Véhicule automobile selon la revendication 2, **caractérisé en ce que** le module d'entrée d'air piloté (10,20,30) comporte un même support de maintien (30) pour les deux organes (10,20) formant obturateurs variables et le module d'entrée d'air piloté (10,20,30) comporte pour chaque organe formant obturateur variable (10,20) une liaison respective (35) entre l'organe formant obturateur variable (10,20) et le support de maintien (30), chacune de ces liaisons (35) étant configurée pour autoriser un déplacement de l'organe formant obturateur variable (10,20) par rapport au support de maintien (30) en direction du module de ventilation forcée en cas de choc sur l'organe formant obturateur variable (10,20) et le module d'entrée d'air piloté (10,20,30) comporte pour chaque organe formant obturateur variable (10,20) un aménagement respectif (16,36) d'arrêt de l'organe formant obturateur variable (10,20) en déplacement de celui-ci vers le module de ventilation forcée, l'aménagement d'arrêt (16,36) étant à chaque fois configuré pour empêcher un endommagement du module de ventilation forcée par l'organe formant obturateur variable (10,20).

8. Véhicule automobile selon l'une quelconque des revendications précédentes, **caractérisé en ce que** la liaison (35) entre l'organe formant obturateur variable (10,20) et le support de maintien (30) forme une ligne fragilisée (35) pour constituer une ligne de rupture en cas de choc sur l'organe formant obturateur variable (10,20).

9. Véhicule automobile selon la revendication précédente, **caractérisé en ce que** la ligne (35) présente une épaisseur de matière suffisamment faible pour rompre en cas de choc sur l'organe formant obturateur variable (10,20).

10. Véhicule automobile selon la revendication 8, **caractérisé en ce que** la ligne (35) est constituée d'une suite d'orifices successifs.

## Patentansprüche

1. Kraftfahrzeug, das einen Motorraum, ein Zwangsbelüftungsmodul, das in dem Motorraum angeordnet ist, ein gesteuertes Lufteingangsmodul (10, 20, 30), das eine Luftpassage durch das Zwangsbelüftungsmodul bildet, und ein Steuermodul umfasst, wobei das gesteuerte Lufteingangsmodul (10, 20, 30) konfiguriert ist, um unter der Steuerung des Steuermodul selektiv mindestens eine Luftdurchgangsgenehmigungsposition und eine Luftdurchgangseinschränkungs- oder Luftdurchgangsblockierungsposition einzunehmen, wobei das gesteuerte Lufteingangsmodul (10, 20, 30) mindestens ein Organ (10, 20) umfasst, das einen variablen Verschluss des Luftdurchgangs bildet, und einen Träger (30) zum Halten des Organs, das den variablen Verschluss (10, 20) bildet, umfasst, **dadurch gekennzeichnet, dass** der Halteträger (30) auf dem Zwangsbelüftungsmodul befestigt ist, und dass das gesteuerte Lufteingangsmodul (10, 20, 30) eine Verbindung (35) zwischen einem Organ, das den variablen Verschluss (10, 20) bildet, und dem Halteträger (30) umfasst, wobei die Verbindung (35) konfiguriert ist, um nachzugeben und daher eine Verlagerung des Organs, das den variablen Verschluss (10, 20) bildet, bezüglich des Halteträgers (30) in Richtung des Zwangsbelüftungsmoduls in dem Fall eines Stoßes auf dem Organ, das den variablen Verschluss (10, 20) bildet, zu gestatten, und das gesteuerte Lufteingangsmodul (10, 20, 30) eine Stoppeinrichtung (16, 36) des Organs, das den variablen Verschluss (10, 20) bildet, bei Verlagerung dieses zu dem Zwangsbelüftungsmodul umfasst, wobei die Stoppeinrichtung (16, 36) konfiguriert ist, um eine Beschädigung des Zwangsbelüftungsmoduls durch das Organ, das den variablen Verschluss (10, 20) bildet, zu verhindern.

2. Kraftfahrzeug nach Anspruch 1, **dadurch gekennzeichnet, dass** das gesteuerte Lufteingangsmodul (10, 20, 30) zwei Organe (10, 20) umfasst, die jeweils einen getrennten variablen Luftdurchgangsverschluss (10, 20) bilden.

3. Kraftfahrzeug nach Anspruch 1 oder Anspruch 2, **dadurch gekennzeichnet, dass** die Verbindung (35) zwischen dem Organ, das den variablen Verschluss (10, 20) bildet, und dem Halteträger (30) konfiguriert ist, um das Organ, das den variablen Verschluss (10, 20) bildet, bezüglich des Halteträgers (30) entlang einer umfänglichen Linie (35) zu dem Organ, das den variablen Verschluss (10, 20) bildet, zu trennen.

4. Kraftfahrzeug nach dem vorstehenden Anspruch, **dadurch gekennzeichnet, dass** die Verbindung (35) zwischen dem Organ, das den variablen Verschluss (10, 20) bildet, und dem Halteträger (30) konfiguriert ist, um das Organ, das den variablen Verschluss (10, 20) bildet, von dem Halteträger (30) entlang einer Linie (35), die das Organ, das den variablen Verschluss (10, 20) bildet, vollständig umgibt, zu trennen.

5. Kraftfahrzeug nach einem der vorstehenden Ansprüche, **dadurch gekennzeichnet, dass** die Stoppeinrichtung (16, 36) aus mindestens einem Ansatz (16), der von dem Organ gebildet wird, das den variablen Verschluss (10, 20) bildet, und einem Stoppanschlag (36) des Ansatzes (16) besteht.

6. Kraftfahrzeug nach dem vorstehenden Anspruch, **dadurch gekennzeichnet, dass** der Stoppanschlag (36) von dem Halteträger (30) gebildet ist.

7. Kraftfahrzeug nach Anspruch 2, **dadurch gekennzeichnet, dass** das gesteuerte Lufteingangsmodul (10, 20, 30) einen gleichen Halteträger (30) für die zwei Organe (10, 20), die variable Verschlüsse bilden, umfasst, und das gesteuerte Lufteingangsmodul (10, 20, 30) für jedes Organ, das den variablen Verschluss (10, 20) bildet, eine jeweilige Verbindung (35) zwischen dem Organ, das den variablen Verschluss (10, 20) bildet, und dem Halteträger (30) umfasst, wobei jede dieser Verbindungen (35) konfigurierbar ist, um eine Verlagerung des Organs, das den variablen Verschluss (10, 20) bildet, bezüglich des Halteträgers (30) in Richtung des Zwangsbelüftungsmoduls in dem Fall eines Stoßes auf dem Organ, das den variablen Verschluss (10, 20) bildet, zu gestatten, und das gesteuerte Lufteingangsmodul (10, 20, 30) für jedes Organ, das den variablen Verschluss (10, 20) bildet, eine jeweilige Stoppeinrichtung (16, 36) des Organs, das den variablen Verschluss (10, 20) bildet, bei Verlagerung dieses zu dem Zwangsbelüftungsmodul umfasst, wobei die Stoppeinrichtung (16, 36) jedes Mal konfiguriert ist, um eine Beschädigung des Zwangsbelüftungsmoduls durch das Organ, das den variablen Verschluss (10, 20) bildet, zu verhindern.

8. Kraftfahrzeug nach einem der vorstehenden Ansprüche, **dadurch gekennzeichnet, dass** die Verbindung (35) zwischen dem Organ, das den variablen Verschluss (10, 20) bildet, und dem Halteträger (30) eine fragilisierte Linie (35) bildet, um eine Bruchlinie in dem Fall eines Stoßes auf dem Organ, das den variablen Verschluss (10, 20) zu bildet, zu bilden.

9. Kraftfahrzeug nach dem vorstehenden Anspruch, **dadurch gekennzeichnet, dass** die Linie (35) eine Materialstärke aufweist, die ausreichend schwach ist, um im Fall eines Stoßes auf dem Organ, das den variablen Verschluss (10, 20) bildet, zu brechen.

10. Kraftfahrzeug nach Anspruch 8, **dadurch gekennzeichnet, dass** die Linie (35) aus einer Abfolge sukzessiver Öffnungen besteht.

## Claims

1. A motor vehicle including an engine compartment, a forced ventilation module arranged in the engine compartment, a driven air inflow module (10, 20, 30) forming a passage of air through the forced ventilation module and a driving module, the driven air inflow module (10, 20, 30) being configured to adopt under the command of the driving module selectively at least one air passage authorisation position and an air passage limitation or blocking position, the driven air inflow module (10, 20, 30) comprising at least one member (10, 20) forming a variable shutter of the passage of air and a maintenance support (30) of the member forming a variable shutter (10, 20), **characterized in that** this maintenance support (30) is fixed on the forced ventilation module, and **in that** the driven air inflow module (10, 20, 30) comprises a link (35) between the member forming a variable shutter (10, 20) and the maintenance support (30), which link (35) is configured to give and thus authorise a displacement of the member forming a variable shutter (10, 20) in relation to the maintenance support (30) in the direction of the forced ventilation module in the event of impact on the member forming a variable shutter (10, 20) and the driven air inflow module (10, 20, 30) comprises a stop arrangement (16, 36) of the member forming a variable shutter (10, 20) in displacement thereof towards the forced ventilation module, the stop arrangement (16, 36) being configured to prevent damage to the forced ventilation module by the member forming a variable shutter (10, 20).

2. The motor vehicle according to Claim 1, **characterized in that** the driven air inflow module (10, 20, 30) comprises two members (10, 20) each forming a distinct variable shutter (10, 20) of the passage of air.

3. The motor vehicle according to Claim 1 or Claim 2, **characterized in that** the link (35) between the member forming a variable shutter (10, 20) and the maintenance support (30) is configured to disengage the member forming a variable shutter (10, 20) in relation to the maintenance support (30) along a circumferential line to the member forming a variable shutter (10, 20).

4. The motor vehicle according to the preceding claim, **characterized in that** the link (35) between the member forming a variable shutter (10, 20) and the maintenance support (30) is configured to disengage the member forming a variable shutter (10, 20) from the maintenance support (30) along a line (35) entirely surrounding the member forming a variable shutter (10, 20).

5. The motor vehicle according to any one of the preceding claims, **characterized in that** the stop arrangement (16, 36) is constituted by at least one appendage (16) formed by the member forming a variable shutter (10, 20) and a stop (36) of the appendage (16) .

6. The motor vehicle according to the preceding claim, **characterized in that** the stop (36) is formed by the maintenance support (30).

7. The motor vehicle according to Claim 2, **characterized in that** the driven air inflow module (10, 20, 30) comprises the same maintenance support (30) for the two members (10, 20) forming variable shutters and the driven air inflow module (10, 20, 30) comprises for each member forming a variable shutter (10, 20) a respective link (35) between the member forming a variable shutter (10, 20) and the maintenance support (30), each of these links (35) being configured to authorise a displacement of the member forming a variable shutter (10, 20) in relation to the maintenance support (30) in the direction of the forced ventilation module in the event of impact on the member forming a variable shutter (10, 20) and the driven air inflow module (10, 20, 30) comprises for each member forming a variable shutter (10, 20) a respective stop arrangement (16, 36) of the member forming a variable shutter (10, 20) in displacement thereof towards the forced ventilation module, the stop arrangement (16, 36) being configured each time to prevent damage to the forced ventilation module by the member forming a variable shutter (10, 20).

8. The motor vehicle according to any one of the preceding claims, **characterized in that** the link (35) between the member forming a variable shutter (10, 20) and the maintenance support (30) forms a weakened line (35) to constitute a rupture line in the event of impact on the member forming a variable shutter (10, 20) .

9. The motor vehicle according to the preceding claim, **characterized in that** the line (35) has a thickness of material which is sufficiently weak so as to break in the event of impact on the member forming a variable shutter (10, 20).

10. The motor vehicle according to Claim 8, **characterized in that** the line (35) is constituted by a series of successive openings.
